# EUROPÄISCHE PATENTANMELDUNG

(11) **EP 4 091 710 A1**
(43) Veröffentlichungstag der Anmeldung: **23.11.2022**
(21) Anmeldenummer: 21174253.1
(22) Anmeldetag: 18.05.2021
(51) Int. Cl.: B01J 23/30, B01J 27/22, B01J 35/00, B01J 35/10, B01J 37/00, B01J 37/02, B01J 37/08, B01J 37/16, B01J 37/18

(54) **METHODE ZUR HERSTELLUNG MESOPORÖSER ÜBERGANGSMETALLKARBIDSCHICHTEN MIT DEFINIERTER NANOSTRUKTURIERUNG SOWIE DEREN ANWENDUNG IN DER ELEKTROKATALYSE**

(71) Anmelder: Technische Universität Berlin, 10623 Berlin (DE)
(72) Erfinder: Frisch, Marvin, 10719 Berlin (DE); Krähnert, Ralph, 13469 Berlin (DE)
(74) Vertreter: Hertin und Partner Rechts- und Patentanwälte PartG mbB

(57) **Zusammenfassung**

Die Erfindung betrifft ein Verfahren zur Herstellung mesoporöser Metallkarbidschichten mit definierter Nanostrukturierung, wobei in einem ersten Schritt des Verfahrens mesoporöse Metalloxidschichten bereitgestellt werden und in einem zweiten Schritt ein In-Kontakt-bringen der Metalloxidschicht in einer reduzierenden Atmosphäre - mit einer Kohlenstoffquelle in der Atmosphäre - erfolgt, wobei die Temperatur mindestens 650 °C beträgt und die Aufheizrate zwischen 0,5 - 2 Kelvin pro Minute liegt.

## Beschreibung

Die Erfindung betrifft ein Verfahren zur Herstellung mesoporöser Metallkarbidschichten mit definierter Nanostrukturierung, wobei in einem ersten Schritt des Verfahrens mesoporöse Metalloxidschichten bereitgestellt werden und in einem zweiten Schritt ein In-Kontakt-bringen der Metalloxidschicht in einer reduzierenden Atmosphäre - mit einer Kohlenstoffquelle in der Atmosphäre - erfolgt, wobei die Temperatur mindestens 650 °C beträgt und die Aufheizrate zwischen 0,5 - 2 Kelvin pro Minute liegt.

Im Stand der Technik sind verschiedene Übergangsmetallkarbide beschrieben, die sich durch ihre außerordentlich hohe mechanische und thermische Stabilität sowie ihre metallische elektrische Leitfähigkeit auszeichnen. Aufgrund dieser vorteilhaften Eigenschaften werden die Übergangsmetallkarbide unter anderem als hitzebeständige Materialien, als verschleißfeste Schneidstoffe sowie im Feld der heterogenen Katalyse oder Elektrokatalyse sowie im Flugzeugbau eingesetzt.

Für viele dieser Anwendungen, wie zum Beispiel in der Elektrokatalyse, sind Materialen mit hoher spezifischer Oberfläche notwendig. Übergangsmetallkarbide wie Wolframkarbide stellen vielversprechende Alternativen zu Platin-basierten Elektrokatalysatoren für die elektrochemische Wasserstofferzeugung dar. So offenbart z.B. die WO 2013/137827 mesoporöse Nanostäbchen aus Wolframkarbid, die ausgehend von Wolfram(VI)-oxid-Nanostäbchen hergestellt werden können. Die pulverförmigen Wolframkarbid-Nanostäbchen fungieren als Supportmaterial für Platin-Nanopartikel. Aufgrund der hohen elektrischen Leitfähigkeit und spezifischen Oberfläche des Supportmaterials werden höhere katalytische Aktivitäten und Stabilitäten in der Wasserstoffbildungsreaktion erreicht. Weiterhin wird offenbart, dass Metallkarbide mit hohen spezifischen Oberflächen sowie einer hohen elektrischen Leitfähigkeit vorteilhaft für elektrokatalytische Anwendungen sind.

Neben den Anwendungen in der Katalyse gewinnen diese Verbindungen aber auch immer größere Bedeutung in der Werkstoffmechanik (beispielsweise als poröse Schleifwerkzeuge). Durch die hochporösen Strukturen lassen sich Schäden am Werkstoff minimieren, da die thermische Beanspruchung der Materialien geringer ist als bei vergleichbaren Materialien.

Hinsichtlich der Herstellung homogener mesoporöser Metalloxidschichten offenbart der Stand der Technik, dass sich die Verwendung eines chemischen Komplexes durch die Zugabe eines komplexbildenden Liganden anstelle einer molekularen beziehungsweise ionischen Metallvorläuferverbindung als besonders geeignet herausgestellt hat. So offenbart die DE 10 2012212237, dass sich durch die Zugabe eines Mizellen-bildenden Strukturtemplats mesoporöse templatierte Metalloxid- sowie Metallkarbonatschichten herstellen lassen.

Es wird weiterhin offenbart, dass Metalloxide mithilfe stabilisierender Liganden hergestellt werden können, wobei die Herstellung von mesoporös templatierten Metallkarbiden nicht beschrieben wird. Im Stand der Technik ist nicht offenbart, dass eine poröse Nanostrukturierung der Karbide mittels Templatierung möglich ist. Des Weiteren wird die Herstellung dünner Schichten auf Substraten sowie deren pseudomorphe Transformation vom Oxid zum Karbid nicht beschrieben.

Die Nachteile des Standes der Technik werden mithilfe der erfindungsgemäßen Lehre behoben. Die Lehre der Erfindung wird durch die unabhängigen Patentansprüche charakterisiert. In einem Aspekt der Erfindung betrifft sie ein Verfahren zur Herstellung mesoporöser Metallkarbidschichten mit einer definierten Nanostrukturierung umfassend die Schritte:
a) Bereitstellung einer mesoporösen Metalloxidschicht;
b) In-Kontakt-bringen der Metalloxidschicht in einer reduzierenden Atmosphäre mit einer Temperatur von mindestens 650 °C, wobei durch eine Aufkohlungsreaktion mit einer Aufheizrate zwischen 0,5 bis 2 Kelvin pro Minute die Ausbildung einer mesoporösen Metallkarbidschicht erfolgt, wobei diese Metallkarbidschicht durch die genannten Verfahrensschritte eine definierte Nanostrukturierung aufweist, wobei bevorzugt eine Kohlenstoffquelle in der Atmosphäre vorliegt, insbesondere Methan oder Ethylen. Die Mindesttemperatur für eine insbesondere vollständige Aufkohlungsreaktion beträgt 650 °C.

Der Fachmann weiß im Lichte dieser Offenbarung, dass er für weniger vollständige Aufkohlungsreaktionen beziehungsweise für unvollständige Aufkohlungsreaktionen auch etwas niedrigere Temperaturen wie 645 °C oder aber auch 600 °C einsetzen kann. Für bevorzugte Übergangsmetalle wie zum Beispiel Wolfram und Molybdän liegt der sinnvolle Temperaturbereich der Aufkohlungsreaktion im Bereich von 650 °C bis 800 °C. Durch einfache Routineversuche kann der durchschnittliche Fachmann für andere Übergangsmetalle die jeweiligen optimalen Temperaturen feststellen.

Die vorliegende Erfindung betrifft daher in einem Aspekt eine Herstellungsmethode von porösen Übergangsmetallkarbidschichten mit einer definierten Nanostrukturierung und homogener Porenstruktur ausgehend von insbesondere mesoporösen Übergangsmetalloxidschichten durch eine Aufkohlungsreaktion bei Temperaturen von insbesondere mindestens 650 °C, wobei die Aufheizrate zwischen 0,5 bis 2 Kelvin pro Minute beträgt.

Gemäß IUPAC-Konvention lassen sich poröse Materialien abhängig von ihrer mittleren Porengröße (Durchmesser) in mikro-(<2 nm), meso-(2-50 nm) sowie makroporös (>50 nm) einteilen. Im Zusammenhang mit der Erfindung geht es insbesondere um die Herstellung mesoporöser Materialien. Im Sinne der Erfindung werden die Begriffe Nanostruktur oder Nanostrukturierung im Wesentlichen synonym verwendet. Der durchschnittliche Fachmann bezeichnet mit diesen Begriffen das Auftreten von (mitunter periodischen) Merkmalen auf der Größenskala einiger bis hunderter Nanometer. Im Allgemeinen zeigt eine Nanostruktur in mindestens einer Dimension eine Größe im Nanobereich von 10^-9 m. Im Sinne der Erfindung weisen die in den Materialien enthaltenen Poren Werte für den mittleren Durchmesser im Bereich von Mesoporen (nach IUPAC) auf. In diesem Sinne sind die erfindungsgemäßen Materialien nanostrukturierte Materialien. Die Porenstruktur im Sinne der Erfindung beschreibt das Auftreten von Poren mit ähnlichem Durchmesser und einer ähnlichen Porenform. Im Sinne der Erfindung liegen insbesondere sphärische Poren vor, welche in der Achse senkrecht zum Substrat kontrahiert vorliegen, wodurch sich bevorzugt eine ellipsenartige Porenform ergibt. Die Kontraktion in der Achse senkrecht zum Substrat ist ein Ergebnis der thermischen Behandlung und der gleichzeitigen Entfernung des Templats.

Der Begriff der Aufkohlung bzw. der Aufkohlungsreaktion beschreibt im Sinne der Erfindung die Umsetzung eines Oxids in ein Karbid unter reduzierenden Bedingungen. Ein kohlenstoffhaltiges Gas oder ein analoges Gas dient als "carburizing agent" und treibt die Reaktion in Richtung des Karbids.

Die Erfindung beruht daher in einem weiteren Aspekt darauf, dass die genannte Herstellungsmethode für mesoporöse Metallkarbidschichten eine gezielte Einstellung von Phasenzusammensetzung, Kristallinität sowie Schichtdicke ermöglicht.

Der Begriff der Phasenzusammensetzung beschreibt die Stöchiometrie der hergestellten Metallkarbidschicht. Es können verschiedenste (nicht-)stöchiometrische Metallkarbidzusammensetzungen in der Schicht erhalten werden, z.B. eine Mischung der Phasen WC und W2C im Verhältnis von etwa 1:1. Darüber hinaus wird nach Exposition der Materialien an Luft nach ihrer Herstellung eine dünne (einige nm) Oberflächen-Oxidschicht gebildet, welche die Gesamt-Zusammensetzung des Materials beeinflusst.

In Abhängigkeit der gewählten Parameter der Aufkohlungsreaktion lässt sich die Kristallinität der Materialien verändern. Beispielsweise lässt sich die mittlere Kristallitgröße in der Metallkarbidschicht durch die Temperatur der Aufkohlungsreaktion beeinflussen. Bei den vorliegenden Materialien werden bevorzugt nanokristalline Karbide gebildet (ausgehend von nanokristallinen Oxiden). Die Kristallite sind bevorzugt zueinander orientiert und in der Größe einiger Nanometer.

Die Schichtdicke im Zusammenhang mit der Erfindung bezieht sich explizit auf den mittleren Durchmesser der Schicht im Wesentlichen senkrecht zum Substrat. Das Substrat wird typischerweise in die Darstellung der Schichtdicke nicht miteinbezogen. Die Schichtdicken nehmen beispielsweise Einfluss auf die katalytische Aktivität und können durch eine Anpassung der Konzentration der Vorläuferverbindungen in der Reaktionslösung bei der Synthese des Oxids variiert werden. Darüber hinaus kann die Schichtdicke über eine Veränderung der Ziehgeschwindigkeit bei der Tauchbeschichtung angepasst werden und ist zudem abhängig vom verwendeten Substrat.

Es war völlig überraschend, dass durch die Herstellungsmethode gemäß der Erfindung eine homogene Nanostrukturierung bereitgestellt werden kann, die während der Aufkohlungsreaktion insbesondere in einem reduzierenden, methanhaltigen Gasgemisch weitgehend intakt bleibt. Vorteilhaferweise gelingt dies dann besonders gut, wenn die homogene Nanostrukturierung mithilfe von mesoporös templatierten Metalloxidschichten gewonnen wird, die durch Tauchbeschichtung erzeugt werden.

Üblicherweise ist es so, dass die hohen erforderlichen Temperaturen der Metallkarbid-Bildung den Erhalt beziehungsweise die Ausbildung einer porösen Strukturierung aufgrund von signifikantem Kristallwachstums- und Sintereffekten erschweren. Die vorliegende erfindungsgemäße Methode stellt daher einen bedeutenden Fortschritt der Herstellung nanostrukturierter Übergangsmetallkarbidschichten mit metallischer Schichtleitfähigkeit dar. Demgemäß offenbart die erfindungsgemäße Lehre eine Methode zur Herstellung (meso-)poröser mono- sowie bimetallischer Übergangskarbidschichten mit definierter Nanostrukturierung ausgehend von zuvor hergestellten mesoporös templatierten monobeziehungsweise bimetallischen Übergangsmetalloxidschichten.

Vorteilhafterweise liegen sowohl die Übergangsmetalloxide als auch die zugehörigen Metallkarbide in poly- bzw. nanokristalliner Form vor. Abhängig von der Temperatur der Aufkohlungsreaktion werden verschiedene Karbidphasen gebildet. Neben den mono- bzw. bimetallischen Übergangsmetalloxidschichten erfasst die Erfindung auch die Herstellung von multi-metallischen Schichten mit drei oder mehr Metallen. Es geht im Sinne der Erfindung bei den mono-, bi-, und/oder multi-metallischen Schichten um die Herstellung von Karbidschichten, welche Phasenanteile von verschiedenen Übergangsmetallkarbiden enthalten können, also beispielsweise Mischungen von W-V-Cx. Es handelt sich bevorzugt nicht um nichtphysikalische, homogen-verteilte Anteile zweier oder mehrerer Metallkarbidphasen, welche das Wandmaterial der mesoporösen Schicht bilden. Die Bezeichnungen von z.B. bi- oder multi-metallischen Schichten erfolgt unabhängig vom verwendeten Substrat.

Es war völlig überraschend, dass geringe Temperaturen von beispielsweise 650 °C oder 700 °C über eine Dauer von 30 min bis 10 Stunden, bevorzugt 4 bis 8, besonders bevorzugt von 6 Stunden genügen, um eine Volumen-Phasenumwandlung vom Oxid in das zugehörige Karbid zu erzielen.

Besonders bevorzugte Temperaturbereiche für poröse Wolframkarbidschichten liegen zwischen 700 und 750 °C. Für Molybdänkarbidschichten sind Temperaturen von 700 °C für eine vollständige Phasenumwandlung bevorzugt. Es war besonders überraschend, dass die geringe Aufheizrate von 0,5 bis 2 Kelvin pro Minute, bevorzugt 0,75 bis 1,5 Kelvin pro Minute, insbesondere 1 Kelvin pro Minute entscheidend ist, um die gewünschte Porenstruktur zu erhalten.

In einer weiteren bevorzugten Ausführungsform der Erfindung ist vorgesehen, dass das Bereitstellen der mesoporösen Metalloxidschicht folgende Schritte umfasst:
i) Bereitstellen eines Metallpräkursors, eines Templats, eines ersten Lösungsmittels und eines Komplexbildners, wobei der Komplexbildner eine Carboxygruppe aufweist, wobei der Metallpräkursor das Templat und der Komplexbildner in dem ersten Lösungsmittel gelöst werden, sodass sich Metallpräkursor -Komplexe bilden;
ii) Beschichtung eines Substrats mit den Metallpräkursor-Komplexen, sodass sich eine mizellentemplatierte Filmschicht (Mesophase) auf dem Substrat bildet;
iii) thermische Behandlung der Filmschicht unter einer Inertgasatmosphäre zu einem templatiert mesoporösen Metalloxid.
Die bevorzugte Bereitstellung der nanokristallinen Übergangsmetalloxidschicht mit mesoporös-templatierter Strukturierung erfolgt bevorzugt in einem definierten ternären Gasgemisch unter Erhalt der mesoporösen Strukturen in eine korrespondierende Karbidschicht. Die nanokristallinen Oxidteilchen des porösen Wandmaterials katalysieren überraschenderweise die Umwandlung zum Karbid, wodurch geringe Temperaturen bei der Aufkohlungsreaktion für eine bevorzugt vollständige Volumenumwandlung ausreichend sind. So lassen sich völlig überraschend sehr definierte Übergangsmetallkarbidschichten mit hoher Porenanordnung sowie spezifischer Oberfläche herstellen.

Die hohe Porenanordnung beschreibt im Sinne der Erfindung insbesondere eine regelmäßige Porenanordnung. Dem durchschnittlichen Fachmann ist der Begriff der regelmäßigen Porenanordnung bekannt. Die Begriffe hohe Porenanordnung und regelmäßige Porenanordnung werden im Sinne der Erfindung synonym verwendet. Die regelmäßige Anordnung der Poren ist das Resultat der Mizelltemplatierung bei der Synthese der Schicht. Nach der thermischen Behandlung bildet sich ein Replika der abgeschiedenen Mesophase aus, welches sich dadurch auszeichnet, dass der mittlere Poren-zu-Poren-Abstand im Bereich einiger Nanometer liegt und kaum variiert. In diesem Zusammenhang findet sich ein bevorzugter mittlerer Porendurchmesser in Abhängigkeit des eingesetzten Templats. Diese Eigenschaften beschreiben im Sinne der Erfindung die definierten Schichten. Die hohe bzw. regelmäßige Porenanordnung findet sich über mehrere Zentimeter bis (theoretisch) sogar Metern in der Ebene parallel zum Substrat wieder. Die spezifische Oberfläche im Sinne der Erfindung ist insbesondere über das Verhältnis von Oberfläche in m² zum Gewicht bzw. der Masse des Materials definiert. Eine hohe spezifische Oberfläche impliziert folglich die innere Oberfläche eines Materials, nicht die äußere, einfach ersichtliche. Der Begriff der Porenanordnung wird charakterisiert in der DE 10 2012 212 237 A1 oder in der WO 2011 048 149. In diesem Stand der Technik ist auch offenbart, welche Parameter sich hinsichtlich der Porenanordnung bzw. der Oberflächen bewährt haben.

In einer weiteren bevorzugten Ausführungsform der Erfindung ist vorgesehen, dass das In-Kontakt-bringen der Metalloxidschicht in der reduzierenden Atmosphäre zwischen 30 min und 10 Stunden lang durchgeführt wird. Je nach Metall ist dieser Zeitraum ausreichend, um eine Umwandlung zu den gewünschten Übergangsmetallkarbidschichten aus den bereitgestellten Übergangsmetalloxidschichten zu erreichen. Es war völlig überraschend, dass dieser Zeitraum ausreichend ist, um die vollständige Phasenumwandlung bei den bevorzugten niedrigen Temperaturen durchzuführen.

In einer weiteren bevorzugten Ausführungsform der Erfindung ist vorgesehen, dass die reduzierende Atmosphäre ein ternäres Gasgemisch umfasst, bevorzugt Argon, Wasserstoff, Ethan, Ethylen, CO, CO/CO₂ und/oder Methan, wobei vorzugsweise ein Verhältnis von 5 bis 7:1 zwischen Methan und Wasserstoff vorliegt.

Besonders bevorzugt liegt das Verhältnis von Wasserstoff und Methan bei 6:1. Überraschenderweise wird durch das ternäre bevorzugte Gasgemisch die vollständige Phasenumwandlung zum Karbid sichergestellt. Es war völlig überraschend, dass dieses Gasgemisch dazu führt, dass eine besonders starke Haftung der Oxid- aber insbesondere der Karbidschichten für ganz unterschiedliche Substrate gegeben ist. Insbesondere der Einsatz von Methan bzw. Wasserstoff in dem bevorzugten Verhältnis führt zu einer überraschend guten Ausbeute mesoporöser Übergangsmetallkarbidschichten, die eine definierte Nanostrukturierung aufweisen.

In einer weiteren bevorzugten Ausführungsform der Erfindung ist vorgesehen, dass der Metallpräkursor ein Metall und/oder ein Übergangsmetall umfasst, sodass das Metalloxid ein Übergangsmetalloxid und das Metallkarbid ein Übergangsmetallkarbid ist. Bimetallische Verbindungen wie V-W-Cx oder Ni-W-Cx sind ebenfalls bevorzugt.

In einer weiteren bevorzugten Ausführungsform der Erfindung ist vorgesehen, dass der Metallpräkursor ein Metall und/oder Übergangsmetall ist, ausgewählt aus der Gruppe umfassend Scandium, Titan, Vanadium, Chrom, Mangan, Eisen, Kobalt, Nickel, Kupfer, Zink, Yttrium, Zirkonium, Niob, Molybdän, Technetium, Ruthenium, Rhodium, Palladium, Silber, Lanthan, Cadmium, Hafnium, Tantal, Wolfram, Rhenium, Osmium, Iridium, Platin und/oder Gold.

Es war völlig überraschend, dass sich insbesondere die genannten Metallpräkursor überraschend gut dafür eignen, um das erfindungsgemäße Problem besonders gut zu lösen.

In einer weiteren bevorzugten Ausführungsform der Erfindung ist vorgesehen, dass der oder die Komplexbildner Mono-, Di- oder Tricarbonsäuren, Aminosäuren und/oder Ethylendiaminteraessigsäure umfassen.

Im Sinne der Erfindung sind die Komplexbildner Anionen von Säuren, da diese eine Koordinationsverbindung mit dem Metallkationen eingehen können. Poröse Oxidschichten sind im Stand der Technik bekannt (DE 10 2012 212 237 A1). Überraschenderweise hat sich gezeigt, dass die bevorzugten Komplexbildner für die Bereitstellung der mesoporösen Metalloxidschichten ganz besonders vorteilhaft geeignet sind.

In einer weiteren bevorzugten Ausführungsform der Erfindung ist vorgesehen, dass das Templat Mizellen- und/oder Lamellenstrukturen bildet und das Templat ein amphiphiles Polymer, bevorzugt ein amphiphiles Blockpolymer ist.

Besonders bevorzugt ist das amphiphile Blockcopolymer ausgewählt aus einer Gruppe umfassend Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-blockpolyisobutylen-block-polyethylenoxid (PEO-PIB-PEO), Polyethylen-block-polyethylenoxid (PE-PEO), Polyisobutylen-block-polyethylenoxid (PIB-PEO) und Poly(ethylen-co-butylen)-block-poly(ethylenoxid) (PEB-PEO), Polystyren-block-poly(4-vinylpyridin) (PS-P4VP) oder Gemischen dieser vorzugsweise Polyethylenoxid-block-polybutadien-block-polyethylenoxid (PEO-PB-PEO).

Überraschenderweise hat sich gezeigt, dass die genannten und bevorzugten Template insbesondere die Blockcopolymere ganz besonders gut geeignet sind, um die erfindungsgemäße Aufgabe zu lösen.

In einer weiteren bevorzugten Ausführungsform der Erfindung ist vorgesehen, dass als Lösungsmittel ein Mittel umfassend C1-C4-Alkohol, C₂-C₄-Ester, C₂-C₄-Ether, Formamid, Acetonitril, Aceton, Tetrahydrofuran, Benzyl, Toluol, Dimethylsulfoxid, Dichlormethan, Chloroform, Methanol, Ethanol, Wasser oder deren Mischungen eingesetzt werden.

Überraschenderweise hat sich gezeigt, dass die Verwendung der bevorzugten Lösungsmittel zu besonders guten porösen Oxidschichten führt. Weiterhin war es überraschend, dass die Zugabe von geringen Mengen an Wasser zu einem der bevorzugten Lösungsmittel beziehungsweise Lösungsmittelgemische zu einer noch besseren Ausbildung mesoporöser Oxidschichten führt.

Es lag für den durchschnittlichen Fachmann nicht nahe, dass die Verwendung der genannten Lösungsmittel im Zusammenhang mit der erfindungsgemäßen Lehre dazu führt, dass das Herstellungsverfahren zur Bildung von Oxidschichten bzw. zur Bildung der gewünschten mesoporösen Karbidschichten besonders effizient und besonders gut umgesetzt werden kann.

In einer weiteren bevorzugten Ausführungsform der Erfindung ist vorgesehen, dass das Substrat durch Tauchbeschichten, Rakeln, Tropfbeschichten, Gießstreichen, Rotationsbeschichten und/oder Sprühbeschichten erfolgt.

Der Schritt des erfindungsgemäßen Beschichtens, welcher in Schritt i) des Verfahrens der Bereitstellung der mesoporösen Metalloxidschichten umgesetzt wird, erfolgt besonders bevorzugt mit Tauchbeschichten. Die weiteren genannten Beschichtungsverfahren sind aber ebenfalls bevorzugt. Bei dem besonders bevorzugten Tauchbeschichten werden besonders gute Resultate erreicht, wenn die Rückzugsgeschwindigkeit im Bereich von 1 bis 500 mm pro Minute liegt und/oder die Temperatur während der Beschichtung zwischen 10 und 50 °C und/oder die Trocknungszeit im Bereich von 0,1 Minute bis 2 Stunden liegt. Besonders bevorzugt ist es, wenn die Luftfeuchte zwischen 10 bis 60 % beträgt.

In einer anderen bevorzugten Ausführungsform der Erfindung ist vorgesehen, dass das Metalloxid bei einer Temperatur zwischen 350 und 650 °C in dem reduzierenden Gasgemisch gebildet wird. Das Metalloxid kann bevorzugt über ein Verfahren bereitgestellt werden, welches die genannten Schritte i), ii) und iii) umfasst.

Die thermische Behandlung der Filmschicht unter einer Inertgasatmosphäre zu einem templatiert mesoporösen Metalloxid (Schritt iii)) kann bei verhältnismäßig geringen Temperaturen zwischen 350 und 650 °C erfolgen. Es war überraschend, dass dieser Temperaturbereich der thermischen Behandlung der Filmschicht zu einer mesoporösen Metalloxidschicht führt, die anschließend besonders gut in eine mesoporöse Metallkarbidschicht mithilfe des erfindungsgemäßen Verfahrens umgewandelt werden kann.

In einer weiteren bevorzugten Ausführungsform der Erfindung ist das Substrat, auf dem die Beschichtung erfolgen kann, ausgewählt aus der Gruppe umfassend Silizium, Siliziumdioxid, Siliziumkarbid, Borkarbid, Stahl, Graphit, Graphen, Glaskohlenstoff, Gold, Silber, Platin, Kupfer, Nickel, Aluminium, Titan und/oder Legierungen daraus und/oder temperaturstabile Polymere, Kunststoffe und/oder Membranen, wobei das Substrat bevorzugt ein Wafer ist. Im Sinne der Erfindung können auch Streckmetalle oder Metallschäume beschichtet werden.

In einem besonders wichtigen und zentralen Aspekt betrifft die Erfindung eine Metallkarbidschicht, die mit dem erfindungsgemäßen Verfahren hergestellt wurde. Die Metallkarbidschicht zeichnet sich durch eine hohe Porenordnung aus. Die Metallkarbidschichten im Sinne der Erfindung sind makroskopisch rissfrei sowie homogen und verfügen über sehr gute mono- oder bimetallische Eigenschaften. Die Metallkarbidschichten weisen außergewöhnlich gute und überraschende physikalische Eigenschaften auf, wie beispielsweise die definierte Porenstruktur in Verbindung mit ihrer hohen elektrischen Leitfähigkeit sowie mechanischen Stabilität (Härte).

Die Übergangsmetallkarbidschichten im Sinne der Erfindung verfügen in ihrer Summe über eine Vielzahl von vorteilhaften Eigenschaften, die sich im Stand der Technik in dieser Kombination nicht finden lassen. Auch wenn die Herstellung zahlreicher Übergangsmetallkarbide, bevorzugt in Form polykristalliner Pulver, hinreichend offenbart ist, ist die besonders hohe thermodynamische Stabilität der erfindungsgemäßen Übergangsmetallkarbidschichten besonders vorteilhaft. Viele Übergangsmetallkarbide des Standes der Technik weisen außerdem nur eine unzureichende poröse Nanostrukturierung auf.

Es war völlig überraschend, dass die Lehre der Erfindung insbesondere die Bereitstellung der Metallkarbidschicht mit definierter Struktur die Ausbildung makroskopisch rissfreier Schichten ermöglicht, welche sehr geringe Varianzen in ihren Eigenschaften aufweisen. Der mittlere Porendurchmesser variiert beispielsweise um weniger als 20 %. Darüber hinaus bildet sich für alle Schichten ein dreidimensional verknüpftes Porensystem aus. Dies ist entscheidend für die Anwendung in der Katalyse und anderen bevorzugten Anwendungen. Die Schichtdicke ist präzise einstellbar und variiert kaum über mehrere Zentimeter auf dem gewählten Substrat.

Besonders vorteilhaft ist es, dass die erfindungsgemäßen Metallkarbidschichten insbesondere Mesoporen zwischen 2 und 50 nm aufweisen. Je nach Variation des Polymertemplats bei der Synthese lassen sich auch Makroporen herstellen. Es war völlig überraschend, dass sich der mittlere Durchmesser der Poren durch eine Variation des Polymertemplats gut einstellen lässt. Der mittlere Abstand einer Pore zu einer benachbarten Pore lässt sich in Anpassung der molaren Verhältnisse von Templat und Metallpräkursoren sehr gut einstellen. Dies verändert jeweils die Wanddicke des Metalloxids bzw. des Metallkarbids. Bevorzugt sind die Poren homogen verteilt.

In einem weiteren Aspekt der Erfindung werden die Metallkarbidschichten, die mit dem erfindungsgemäßen Verfahren gewonnen werden, als Katalysatoren oder Katalysatorträger als Verbindungshalbleiter in der Photovoltaik, der Elektrokatalyse oder der Photo(elektro)katalyse in der Medizintechnik als Energiespeicher als magnetische Datenspeicher, als Schleifmittel in Werkstoffbearbeitungen und/oder als Trägermaterial für Schleifstoffe und/oder Schmiermittel eingesetzt.

Im Folgenden soll die Erfindung anhand von Abbildungen näher erläutert werden, ohne auf diese Abbildungen oder die mit diesen illustrierten Beispielen beschränkt zu sein.

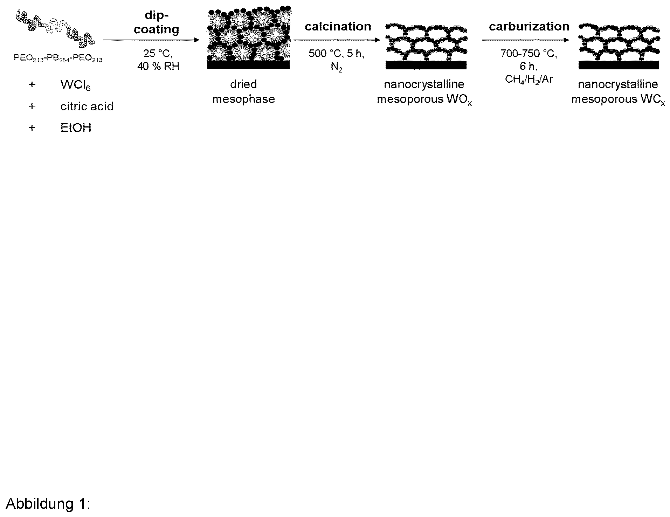

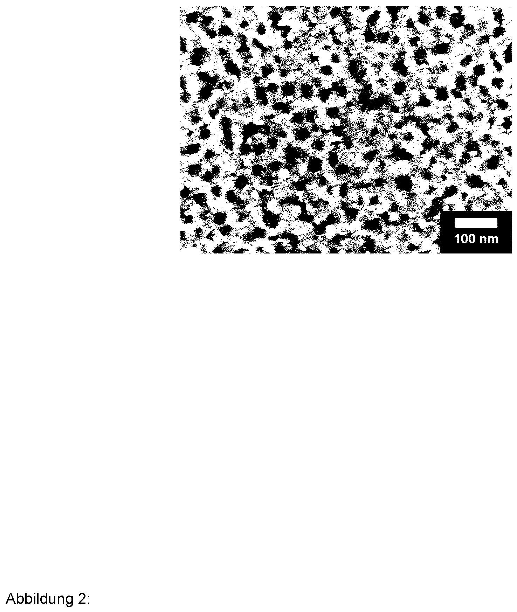

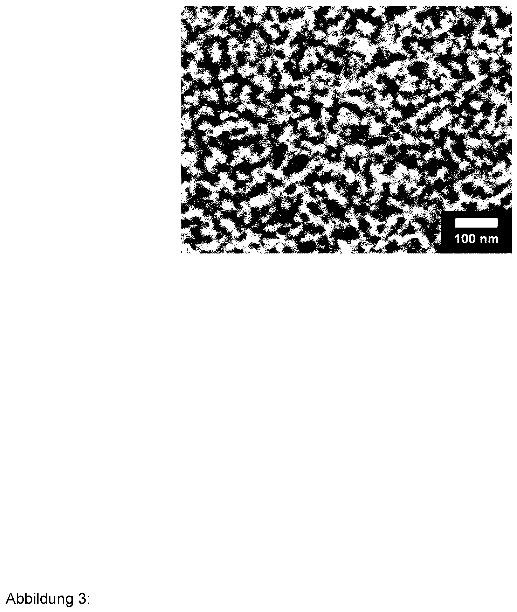

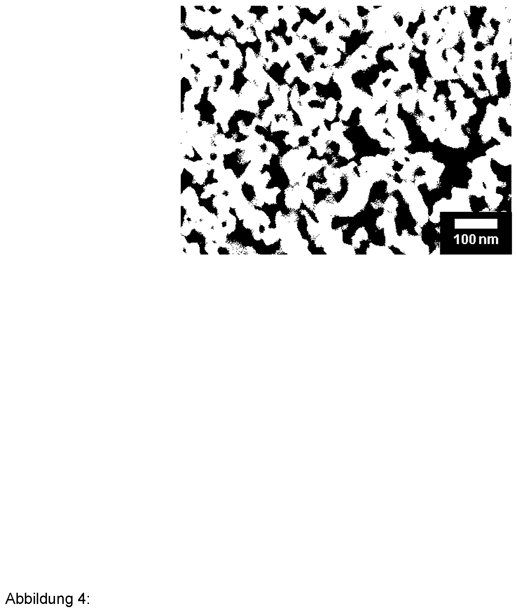

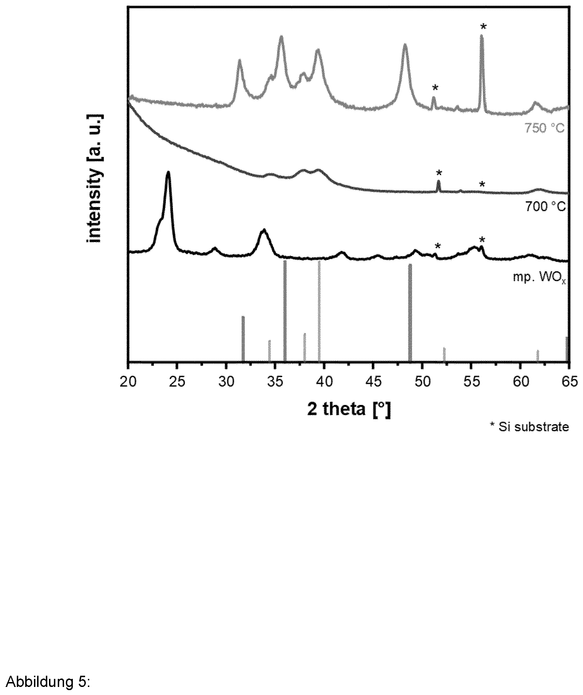

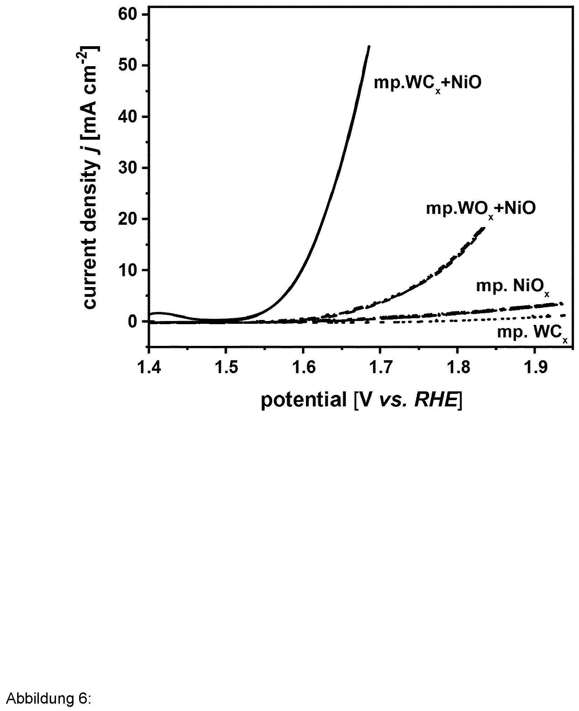

Abbildung 1 zeigt schematisch die verwendete Herstellungsroute für die Synthese mesoporöser Übergangsmetalloxid- bzw. karbidschichten am Beispiel von Wolframoxid bzw. -karbid. Abbildungen 2-4 zeigen rasterelektronenmikroskopische Aufnahmen der hergestellten Wolframoxid bzw. -karbidschichten in Draufsicht in 100.000-facher Vergrößerung auf einem Siliziumwafer als Substrat. Abbildung 5 zeigt die Ergebnisse der röntgendiffraktometrischen Analyse der mesoporösen Wolframoxid- bzw. -karbidschichten unter gleisendem Einfall (Gl-XRD) vermessen mit monochromatischer Cu-K_{α}-Strahlung mit einer Wellenlänge von 1.54 Å auf Silizium-Substraten. Abbildung 6 zeigt die Ergebnisse einer elektrokatalytischen Testmessung (alkalische Sauerstoffbildungsreaktion, OER) im Vergleich zu Referenzsystemen vor sowie nach der Abscheidung von katalytisch aktiver Spezies.

Die Abbildungen 1 bis 6 zeigen die Herstellung von makroskopisch-rissfreien, homogenen mono- oder bimetallischen Übergangsmetallkarbidschichten mit definierter Porenstruktur auf geeigneten Substraten.

Metallkarbidschichten zeichnen sich hinsichtlich ihrer hervorragenden physikalischen Eigenschaften aus, wie bspw. einer hohen elektrischen Leitfähigkeit sowie mechanischer Stabilität (Härte) und sind den Metalloxidschichten überlegen. Die Herstellung zahlreicher Übergangsmetallkarbide, bevorzugt in Form polykristalliner Pulver, ist hinreichend offenbart. Die hohe thermodynamische Stabilität der Metalloxid-Phasen erfordert für die Mehrzahl an Metallen sehr hohe Temperaturen für die Phasenumwandlung zum Karbid. Dies führt zu einem irreversiblen Verlust der porösen Nanostrukturierung der Materialien. Durch eine geeignete Wahl der Synthesebedingungen können jedoch nun poröse, nanostrukturierte, makroskopischrissfreie Übergangsmetallkarbidschichten über eine Aufkohlungsreaktion aus dem zugehörigen mesoporösen Oxid hergestellt werden.

Durch die Zugabe geeigneter Übergangsmetallpräkursoren in die Syntheselösung lassen sich darüber hinaus bimetallische Oxide bzw. Karbide herstellen. Für die Herstellung der mesoporös templatierten Übergangsmetalloxide wurde eine spezielle Methode etabliert. Diese zeichnet sich durch die Zugabe eines stabilisierenden kohlenstoffhaltigen, anionischen Liganden, bspw. Citrat, zu der mono- bzw. bi-metallhaltigen Vorläuferlösung in einem geeigneten Lösungsmittel, bevorzugt Ethanol, aus. Die Lösungen zeichnen sich durch ausreichende Stabilität und Beständigkeit gegenüber Hydrolyse und Fällungsreaktionen aus und ermöglichen die Herstellung homogener, makroskopisch rissfreier poröser Filme mit definierter Struktur durch einen nachfolgenden Tauchbeschichtungsprozess mit anschließender thermischer Behandlung unter inerten Bedingungen. Dabei zersetzt sich das eingesetzte porenformende Templat nahezu vollständig durch Oxidation, welche durch die benachbarten Lewis-sauren Metallkationen zusätzlich katalysiert wird.

Wie in Abbildung 2 ersichtlich, lassen sich auf diese Weise mesoporös templatierte Strukturen erzeugen. Bemerkenswerterweise ist die mechanische bzw. morphologische Stabilität dieser mono- bzw. bimetallischen Übergangsmetalloxidfilme ausreichend hoch, um in einer nachfolgenden Aufkohlungsreaktion unter reduktiven Bedingungen eine mesoporöse Übergangsmetallkarbidschicht zu bilden, ohne dass ein irreversibler Verlust der Porenstruktur bzw. -ordnung erfolgt oder makroskopische Rissbildung eintritt.

Aufgrund der Oxidationsempfindlichkeit der hergestellten Karbidmaterialien, wird durch einen abschließenden Passivierungsschritt eine dünne Oxidschicht auf der Oberfläche der Karbide erzeugt, welche eine vollständige Oxidation unterbindet. Nach der Aufkohlungsreaktion und darin einhergehender Ausbildung der Karbidphasen im Volumen, zeigen die mesoporösen Filme metallische Schichtleitfähigkeiten (gemessen mittels Impedanzspektroskopie bei 25 °C in Luft). Diese signifikante Erhöhung der elektrischen Leitfähigkeit gegenüber der Oxid-Vorstufen ist ein weiteres Indiz für die erfolgreiche Ausbildung einer Volumen-Karbidphase.

Die hergestellten Übergangsmetallkarbidschichten eignen sich aufgrund dieser hervorragenden elektrischen Eigenschaften bspw. als Substrate in der Elektrokatalyse. In dieser Erfindungsmeldung wird zum ersten Mal der Einsatz templatiert poröser Wolframkarbid-Filme als Trägermaterialien von katalytisch aktiver Spezies für die elektrochemische Wasserspaltung vorgestellt. Als konzeptioneller Beweise wurde mittels Atomlagenabscheidung (ALD) NiO auf der inneren sowie äußeren Oberfläche der Oxid- sowie Karbidfilme abgeschieden und in einem rotierenden Scheibenelektrodenaufbau in alkalischem Elektrolyten untersucht. Gegenüber reinen mesoporösen NiOₓ-Filmen konnte ein deutlicher Performance-Vorsprung erreicht werden. Dieser kann in erster Linie auf die signifikant erhöhte elektrische Leitfähigkeit des Trägermaterials zurückgeführt werden, da NiO halbleitende Eigenschaften aufweist. Bemerkenswerterweise zeigte das NiO-beschichtete Wolframkarbid keine merkliche Abnahme der katalytischen Aktivität über 150 Cyclovoltammogramme in 0.1 M KOH als Elektrolyten. Bei vergleichbarer Beladung an katalytisch aktivem NiO konnten deutlich höherer Stromdichten im Vergleich zu mit NiO-beschichtetem WOₓ erhalten werden. Die Untersuchungen zeigen die prinzipielle Anwendbarkeit poröser Übergangsmetallkarbide als elektrisch leitfähige Trägermaterialien für die Elektrokatalyse.

Die Zeichnungen zeigen im Detail:
Abbildung 1: Darstellung des verwendeten Syntheseschemas zur Herstellung mesoporös templatierter Übergangsmetalloxid- bzw. Übergangsmetallkarbidschichten am Beispiel von Wolframoxid bzw. Wolframkarbidschichten. Exemplarisch wird die Zugabe von Citrat als stabilisierendem Liganden der metallischen Vorläuferverbindung dargestellt. Die Temperatur der Aufkohlungsreaktion im letzten Schritt liegt bevorzugt zwischen 700 und 750 °C.
Abbildung 2: Rasterelektronenmikroskopische Aufnahme (Draufsicht) auf einen hergestellten mesoporös templatierten WOₓ-Film auf einem Siliziumwafer als Substrat.
Abbildung 3: Rasterelektronenmikroskopische Aufnahme (Draufsicht) auf einen hergestellten porösen W₂C-Film *via* Aufkohlungsreaktion für 6 h bei 700 °C auf einem Siliziumwafer als Substrat.
Abbildung 4: Rasterelektronenmikroskopische Aufnahme (Draufsicht) auf einen hergestellten porösen W₂C/WC-Film *via* Aufkohlungsreaktion für 6 h bei 750 °C auf einem Siliziumwafer als Substrat.
Abbildung 5: Röntgendiffraktometrische Analyse unter gleisendem Einfall (Gl-XRD) der hergestellten mesoporösen WOₓ sowie WCₓ-Schichten *via* Aufkohlungsreaktion für 6 h bei 700 °C (dunkelgrau) bzw. 750 °C (hellgrau) ausgehend von mesoporösem WOₓ (schwarz) auf einem Siliziumwafer als Substrat (Reflexe mit * indiziert). Referenzpattern: WC (dunkelgraue Balken) sowie W₂C (hellgraue Balken).
Abbildung 6: Elektrokatalytische Messungen (50. CV) der Sauerstoffbildungsreaktion (OER, oxygen evolution reaction) in einem rotierenden Scheibenelektrodenaufbau in 0.1 M KOH und 25 °C in N₂-gesättigtem Elektrolyten. Gezeigt sind Messungen von hergestellten mesoporösen WCₓ-Schichten *via* Aufkohlungsreaktion für 6 h bei 700 °C vor (gepunkteter Graph) bzw. nach (durchgehender Graph) der Abscheidung von katalytisch aktiver Spezies. Diese erfolgte bspw. durch eine NiO-ALD. Alle untersuchten Filme wurden auf einem polierten Titanblech als Substrat hergestellt und vermessen. Als Referenzen wurden mesoporös templatierte NiOₓ-Filme (Strich-Punkt) hergestellt und deren OER-Aktivität untersucht. Die höhere katalytische Aktivität des beschichteten mesoporösen WCₓ-Trägermaterials zeigt sich anhand des Vergleichs des mit einer ähnlichen Menge an NiO-beschichtetem mesoporösen WOₓ (gestrichelter Graph).

### Beispiel für die Herstellung eines mesoporösen Wolframoxid-Films mit nachfolgender Umwandlung zum -karbid durch Aufkohlungsreaktion:

Chemikalien: Wolfram(VI)-chlorid (> 99%, zur Analyse) wurde von Merck erhalten. Citronensäure (> 99,5% p. a., wasserfrei) wurde von Roth erworben. Das Polymertemplat Poly(ethylenoxid)-*b*-poly(butadien)-*b*-poly(ethylenoxid) (18.700 g/mol PEO und 10.000 g/mol PB) wurde von der Polymer Service Merseburg GmbH erhalten. Ethanol (> 99,9%, absolut) wurde von VWR erworben. Alle Chemikalien wurden ohne weitere Aufreinigung eingesetzt.

Filmsynthese: Vor der Filmabscheidung wurden die Siliziumsubstrate mit Ethanol gereinigt und an der Luft kalziniert (2 h, 600 °C). Die verwendeten Quarzsubstrate wurden in einer alkalischen Isopropanollösung für 30 min im Ultraschallbad geätzt. Templat PEO₂₁₃-PB₁₈₄-PEO₂₁₃ (55 mg, 3,6 µmol), Zitronensäure (384 mg, 2,0 mmol) und WCl₆ (397 mg, 1,0 mmol) wurden in 3,0 mL Ethanol bei 50 °C unter Rühren gelöst. Die Lösung färbte sich tiefblau. Zugabe der komplexierenden Zitronensäure sorgte für einen Farbumschlag der Lösung von tiefgrün nach tiefblau. Die Filme wurden mittels Tauchbeschichten von Substraten mit einer Rückzugsgeschwindigkeit von 300 mm/min unter kontrollierter Atmosphäre (25 °C, 40 % relative Feuchtigkeit) hergestellt. Anschließend wurden die Filme mindestens 5 min lang getrocknet. Die Filme wurden in einem Rohrofen 5 h bei 500 °C unter Stickstoffatmosphäre, gefolgt von Abkühlenlassen auf Raumtemperatur, behandelt.

Für die Umwandlung zum Metallkarbid wurden die hergestellten Oxidschichten für 6 h bei 700 °C in einer ternären Gasmischung aus CH₄/H₂/Ar mit einer Aufheizrate von 1 K/min behandelt. Das Verhältnis von CH₄ zu H₂ wurde als 1:6 eingestellt. Der gesamte Gasstrom betrug 150 mL/min. Nach Abkühlen auf 250 °C wurden die Filme an der Oberfläche mithilfe einer dünnen Oxidschicht passiviert. Dazu wurde eine Mischung von 1:1 N₂ zu Luft in den Rohrofen eingeleitet.

Charakterisierung: TEM-Aufnahmen wurden mit einem FEI Tecnai G 2 20 S-TWIN bei 200 kV Beschleunigungsspannung von Filmen angefertigt, die von den Substraten teilweise abgekratzt und auf ein mit Kohlenstoff beschichtetes Kupfernetz überführt worden waren. Die SEM-Aufnahmen wurden mit einem JEOL 7401F mit einer Beschleunigungsspannung von 10 kV und einem Arbeitsabstand von 4 mm aufgenommen. Die Schichtdicken wurden im Querschnitt gemessen. Zur Bestimmung des Porendurchmessers und der Schichtdicke wurde Image J, Version 1.39u, (http://rsbweb.nih.gov/ij) eingesetzt. Die Raman-Spektren wurden mit einem LabRam HR 800 instrument (Horiba Jobin Yvon) gekoppelt an ein BX41 Mikroskop (Olympus) aufgezeichnet. Das System ist mit einem HeNe Laser Laser mit einer Wellenlänge von 633 nm und einem 300 mm⁻¹ Gitter ausgestattet. XRD-Aufnahmen erfolgten mit einem Bruker D8 Advance (Cu-Kα-Strahlung) unter streifendem Einfallswinkel von 1°. Die Reflexe wurden unter Verwendung von PDFMaintEx Library zugeordnet.

## Patentansprüche

1. Verfahren zur Herstellung mesoporöser Metallkarbidschichten mit definierter Nanostrukturierung umfassend die Schritte:
a) Bereitstellen einer mesoporösen Metalloxidschicht;
b) In-Kontakt-bringen der Metalloxidschicht in einer reduzierenden Atmosphäre aufweisend eine Kohlenstoffquelle bei einer Temperatur von mindestens 650 °C, wobei durch eine Aufkohlungsreaktion mit einer Aufheizrate zwischen 0,5 - 2 Kelvin pro Minute die Ausbildung einer mesoporösen Metallkarbidschicht erfolgt.

2. Verfahren nach dem vorherigen Anspruch
**dadurch gekennzeichnet, dass**
das Bereitstellen der mesoporösen Metalloxidschicht folgende Schritte umfasst:
i) Bereitstellen eines Metallpräkursors, eines Templats, eines ersten Lösungsmittels und eines Komplexbildners, wobei der Komplexbildner eine Carboxygruppe aufweist, wobei der Metallpräkursor, das Templat und der Komplexbildner in dem ersten Lösungsmittel gelöst werden, sodass sich Metallpräkursor-Komplexe bilden;
ii) Beschichtung eines Substrats mit den Metallpräkursor-Komplexen, sodass sich eine mizelltemplatierte Filmschicht (Mesophase) auf dem Substrat bildet;
iii) Thermische Behandlung der Filmschicht unter einer Inertgasatmosphäre zu einem templatiert mesoporösen Metalloxid.

3. Verfahren nach einem oder mehreren der vorherigen Ansprüche
**dadurch gekennzeichnet, dass**
der Schritt b) in der reduzierenden Atmosphäre zwischen 30 min und 10 Stunden lang durchgeführt wird.

4. Verfahren nach einem oder mehreren der vorherigen Ansprüche
**dadurch gekennzeichnet, dass**
die reduzierende Atmosphäre ein ternäres Gasgemisch umfasst, bevorzugt Argon, Wasserstoff, Ethan, Ethylen, CO, CO/CO₂ und/oder Methan, wobei vorzugsweise ein Verhältnis von 5-7:1 zwischen Methan und Wasserstoff vorliegt.

5. Verfahren nach Anspruch 2
**dadurch gekennzeichnet, dass**
der Metallpräkursor ein Metall und/oder ein Übergangsmetall umfasst, sodass das Metalloxid in ein Übergangsmetalloxid und das Metallkarbid ein Übergangsmetallkarbid ist.

6. Verfahren nach Anspruch 2 und/oder 5
**dadurch gekennzeichnet, dass**
der Metallpräkursor ein Metall und/oder Übergangsmetall ist ausgewählt aus einer Gruppe umfassend aus Scandium, Titan, Vanadium, Chrom, Mangan, Eisen, Kobalt, Nickel, Kupfer, Zink, Yttrium, Zirkonium, Niob, Molybdän, Technetium, Ruthenium, Rhodium, Palladium, Silber, Lanthan, Cadmium, Hafnium, Tantal, Wolfram, Rhenium, Osmium, Iridium, Platin und/oder Gold.

7. Verfahren nach Anspruch 2
**dadurch gekennzeichnet, dass**
der Komplexbildner Mono-, Di- oder Tricarbonsäuren, Aminosäuren und/oder Ethylendiaminteraessigsäure umfasst.

8. Verfahren nach Anspruch 2
**dadurch gekennzeichnet, dass**
das Templat Mizellen- und/oder Lamellenstrukturen bildet und das Templat ein amphiphiles Polymer, bevorzugt ein amphiphiles Blockcopolymer ist.

9. Verfahren nach dem vorherigen Anspruch
**dadurch gekennzeichnet, dass**
das amphiphile Blockcopolymer ausgewählt ist aus einer Gruppe umfassend Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-blockpolyisobutylen-block-polyethylenoxid (PEO-PIB-PEO), Polyethylen-block-polyethylenoxid (PE-PEO), Polyisobutylen-block-polyethylenoxid (PIB-PEO) und Poly(ethylen-co-butylen)-block-poly(ethylenoxid) (PEB-PEO), Polystyren-block-poly(4-vinylpyridin) (PS-P4VP), oder Gemischen dieser vorzugsweise Polyethylenoxid-block-polybutadien-block-polyethylenoxid (PEO-PB-PEO).

10. Verfahren nach Anspruch 2
**dadurch gekennzeichnet, dass**
als Lösungsmittel ein Mittel umfassend C1-C4-Alkohol, C₂-C₄-Ester, C₂-C₄-Ether, Formamid, Acetonitril, Aceton, Tetrahydrofuran, Benzyl, Toluol, Dimethylsulfoxid, Dichlormethan, Chloroform, Methanol, Ethanol, Wasser oder deren Mischungen eingesetzt werden.

11. Verfahren nach Anspruch 2
**dadurch gekennzeichnet, dass**
die Beschichtung des Substrats durch Tauchbeschichten, Rakeln, Tropfbeschichten, Gießstreichen, Rotationsbeschichten und/oder Sprühbeschichten erfolgt.

12. Verfahren nach Anspruch 2
**dadurch gekennzeichnet, dass**
das Metalloxid bei einer Temperatur zwischen 350°C und 650°C in dem reduzierenden Gasgemisch gebildet wird.

13. Verfahren nach Anspruch 2
**dadurch gekennzeichnet, dass**
das Substrat ausgewählt ist aus einer Gruppe umfassend Silizium, Siliziumdioxid, Siliziumkarbid, Borkarbid, Stahl, Graphit, Graphen, Glaskohlenstoff, Gold, Silber, Platin, Kupfer, Nickel, Aluminium, Titan, und/oder Legierungen daraus und/oder temperaturstabile Polymere, Kunststoffe und/oder Membranen, wobei das Substrat bevorzugt ein Wafer, Streckmetalle und/oder Metallschäume sind.

14. Metallkarbidschicht hergestellt gemäß eines Verfahrens nach einem oder mehreren der vorherigen Ansprüche

15. Metallkarbid nach dem vorherigen Anspruch
**dadurch gekennzeichnet, dass**
die Metallkarbidschicht Poren aufweist, wobei die Poren mesoporös und/oder makroporös sein können, wobei bevorzugt die Poren homogen verteilt sind.

16. Metallkarbid nach einem der vorhergehenden Ansprüche
**dadurch gekennzeichnet, dass**
die Metallkarbidschicht mit einer weiteren porenkonformen Schicht beschichtet wird, insbesondere NiO.

17. Verwendung der Metallkarbidschichten nach Anspruch 14 und/oder 15 als Katalysatoren oder Katalysatorträger, als Verbindungshalbleiter in der Photovoltaik, Elektrokatalyse oder Photo(elektro)katalyse, in der Medizintechnik, als Energiespeicher, als magnetische Datenspeicher, als Schleifmittel in Werkstoffbearbeitungen und/oder als Trägermaterial für Schleifstoffe und/oder Schmiermittel.
